# EUROPÄISCHE PATENTSCHRIFT

(11) **EP 0 530 474 B1**
(45) Veröffentlichungstag und Bekanntmachung des Hinweises auf die Patenterteilung: **14.12.1994**
(21) Anmeldenummer: 92112042.4
(22) Anmeldetag: 15.07.1992
(51) Int. Cl.: B60N 2/48

(54) **Kopfstütze für Kraftfahrzeugsitze**
Headrest for automotive vehicles
Appui-tête pour véhicules automobiles

(30) Priorität: 06.09.1991 DE 4129660
(43) Veröffentlichungstag der Anmeldung: 10.03.1993
(73) Patentinhaber: PETER BUTZ GmbH & Co Verwaltungs-KG, 40764 Langenfeld (DE)
(72) Erfinder: Butz, Eugen Otto, W-4010 Hilden (DE)
(74) Vertreter: Patentanwälte Ostriga & Sonnet

(56) Entgegenhaltungen:
- EP-A- 0 265 962
- EP-A- 0 267 503
- DE-A- 3 050 958
- DE-A- 3 633 634
- DE-U- 9 111 085
- US-A- 4 589 698

## Beschreibung

Die Erfindung betrifft eine Kopfstütze für Kraftfahrzeugsitze entsprechend dem Oberbegriff des Anspruchs 1. Eine derartige Kopfstütze ist durch die DE-C-3 050 958 bekanntgeworden.

Gemäß Fig. 1 der DE-C-3 050 958 weist die Sitzhülse über ihre gesamte Axiallänge einen rohrartigen Querschnitt auf, dessen durchgehend kreiszylindrische Innenmantelfläche nur im unteren Haltebereich mit zwei diametral gegenüberliegenden Axialschlitzen versehen ist, damit die Vorsprünge durch Einführen der Tragstange etwa dübelartig auseinandergespreizt werden können. Die bekannte Sitzhülse, ein Kunststoffspritzgußteil, erfordert zu ihrer Herstellung eine recht aufwendige Backenform, da der Innenraum der Sitzhülse auf gesamter Axiallänge hinterschnitten ist.

Ausgehend von der bekannten Kopfstütze gemäß der DE-C-3 050 958, liegt der Erfindung die Aufgabe zugrunde, eine Kopfstütze für Kraftfahrzeugsitze mit einer Sitzhülse zu schaffen, welche aufgrund ihrer Bauart mit einem wesentlich geringeren Werkzeugaufwand herzustellen ist.

Entsprechend der Erfindung wird diese Aufgabe dadurch gelöst, daß der Haltebereich eine sich etwa tangential bezüglich des Rohrbereichs von letzterem nach unten erstreckende Grundplatte aufweist, von welcher im Radialabstand voneinander zwei Seitenwände sowie andere Wandteile frei vorragen, deren sämtliche Breitflächenbereiche senkrecht auf einer gemeinsamen Bezugsebene stehen und mit von der Grundplatte wegweisenden schmalen Flächenbereichen den einen Axialschlitz begrenzen, während die Grundplatte den zu ihrem unteren Ende hin offenen anderen Axialschlitz bildet und wobei die Rastvorsprünge außen an den Seitenwänden angeordnet sind.

Entsprechend der Erfindung weist die Erfindung nur noch den Rohrbereich auf, welcher zur Formbildung eines Kernes bedarf, der über Werkzeugbacken entformt werden muß. Der sich an den Rohrbereich anschließende übrige untere Axialbereich der Sitzhülse hingegen, also der Haltebereich, ist von einer Grundplatte gebildet, von deren Kanten zwei Seitenwände und andere Wandteile ausgehen, deren sämtliche Breitflächenbereiche senkrecht auf der Grundplatte stehen. Dies bedeutet, daß der von den Seitenwänden, anderen Wandteilen und der Grundplatte gebildete Bereich der Sitzhülse ggf. unter Einbeziehung einer Formschräge hinterschneidungsfrei ohne Kern mittels einer einfachen Abstreiferform hergestellt werden kann.

Die einfachere Werkzeugform bzw. der einfacher aufgebaute Artikel gestatten zudem eine höhere Arbeitsfrequenz beim Spritzgießen.

Die beiden diametral gegenüberliegenden axialen Längsschlitze zur Erzielung der Dübelwirkung sind wie folgt gebildet: Der eine axiale Längsschlitz entsteht dadurch, daß die von der Grundplatte wegweisenden Schmalflächen der beiden Seitenwände in freiem Abstand voneinander angeordnet sind. Auf diese Weise ist der eine Axialschlitz dadurch gebildet, daß der Haltebereich der erfindungsgemäßen Sitzhülse an einer axialen Längsseite (also einseitig) völlig offen ist. Der andere offene axiale Längsschlitz ist in der Grundplatte angeordnet und ist zu deren unteren Stirnseite hin offen.

Die ebenen Seitenwände sind außen mit den Rastvorsprüngen versehen, welche verhältnismäßig große rechteckige Rastflächen aufweisen, die eine sichere Verrastung in den rahmenseitigen Halte-Durchbrüchen des Sitzlehnen-Rahmenteils gestatten.

Weitere Erfindungsmerkmale ergeben sich aus den Unteransprüchen.

In den Zeichnungen ist ein bevorzugtes Ausführungsbeispiel entsprechend der Erfindung dargestellt. Es zeigt:
Fig. 1 einen Vertikalschnitt durch eine Sitzhülse mit teilweise dargestellter eingeführter Tragstange,
Fig. 2 eine Seitenansicht in der gleichen Blickrichtung der Fig. 1 (ohne Tragstange) auf die offene axiale Längsseite der Sitzhülse,

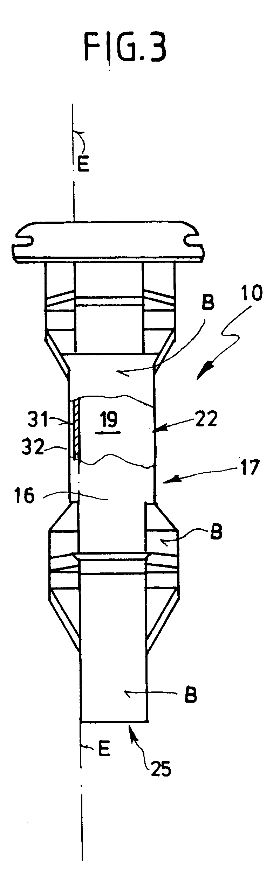

Fig. 3 eine Ansicht mit teilweise herausgebrochener Grundplatte, ansonsten etwa entsprechend dem in Fig. 2 eingetragenen und mit III bezeichneten Ansichtspfeil und
Fig. 4 einen Radialschnitt entsprechend der in Fig. 2 mit IV-IV bezeichneten Schnittlinie.

Eine insgesamt mit 10 bezeichnete Sitzhülse trägt den unteren Bereich einer Tragstange 11. Die Sitzhülse 10 übergreift mit ihren etwa rechteckigen Anschlagflächen 12 eines oberen Kragens 13 den oberen Randbereich einer Durchstecköffnung eines nicht dargestellten Sitzlehnen-Rahmenteils.

Die etwa rechteckigen unteren Rastflächen 14 von diametral außen an Seitenwänden 15, 16 eines Haltebereichs 17 angeordneten Rastvorsprüngen 18 untergreifen das nicht gezeigte sitzlehnenseitige Rahmenteil von unten.

Die Rastvorsprünge 18 sind aufgrund der Elastizität des verwendeten Kunststoffes in der Lage, sich entlang dem Doppelpfeil x zu bewegen, zumal eine die beiden Seitenwände 15, 16 miteinander verbindende ebene Grundplatte 19 mit einem nach unten offenen Axialschlitz 20 versehen ist und die der Grundplatte 19 abgewandten schmalen Flächenbereiche 21 der Seitenwände 15, 16 zwischen sich einen axialen Freiraum bzw. den anderen Axialschlitz 22 begrenzen.

Der Axialschlitz 22 bedeutet, daß der Haltebereich 17 auf gesamter Axiallänge einseitig offen ist.

Den etwa radial zur Tragstangenlängsachse L verlaufenden Rastflächen 14 der Rastvorsprünge 18 sind zur Tragstangenlängsachse L in Richtung unteres Tragstangenende 23 geneigte äußere Führungsflächen 24 vorgeordnet, welche als Breitflächenbereiche der Seitenwände 15, 16 mittels eines haarnadelartig gekrümmten, flachbügelartigen Fortsatzes 25 (anderes Wandteil) miteinander verbunden sind.

Der flachbügelartige Fortsatz 25 ist an seiner der Scheitellinie gegenüberliegenden Innenwandfläche mit einer insbesondere etwa walzenartigen Verstärkung 26 als Anschlagbegrenzung für das untere Tragstangenende 23 versehen.

Der flachbügelartige Fortsatz 25 bildet außerdem eine einstückig stoffschlüssig mit den Rastvorsprüngen 18 verbundene, letztere nach außen in ihrer Rastlage sichernde Bügelfeder, welche zudem bei der Einsatz-Verrastmontage der Sitzhülse 10 in die Durchbrüche des lehnenseitigen Rahmenteils hinein als etwa zentrierspitzenartige Einsteckhilfe dient.

Wenn die Sitzhülse 10 in die Durchbrüche des lehnenseitigen Rahmenteils eingesetzt ist, bildet die nachträglich eingeführte Tragstange 11 gewissermaßen einen Riegel, welcher ein Ausrasten der Rastvorsprünge 18 aus ihrer Rastlage am sitzlehnenseitigen Rahmenteil verhindert. Die Tragstange 11 weist zudem eine sekantiale Kerbe 27 auf, in welche ein Schenkel einer im Kopfteil 28 der Sitzhülse 10 gelagerten Sperrfeder 33 eingreift.

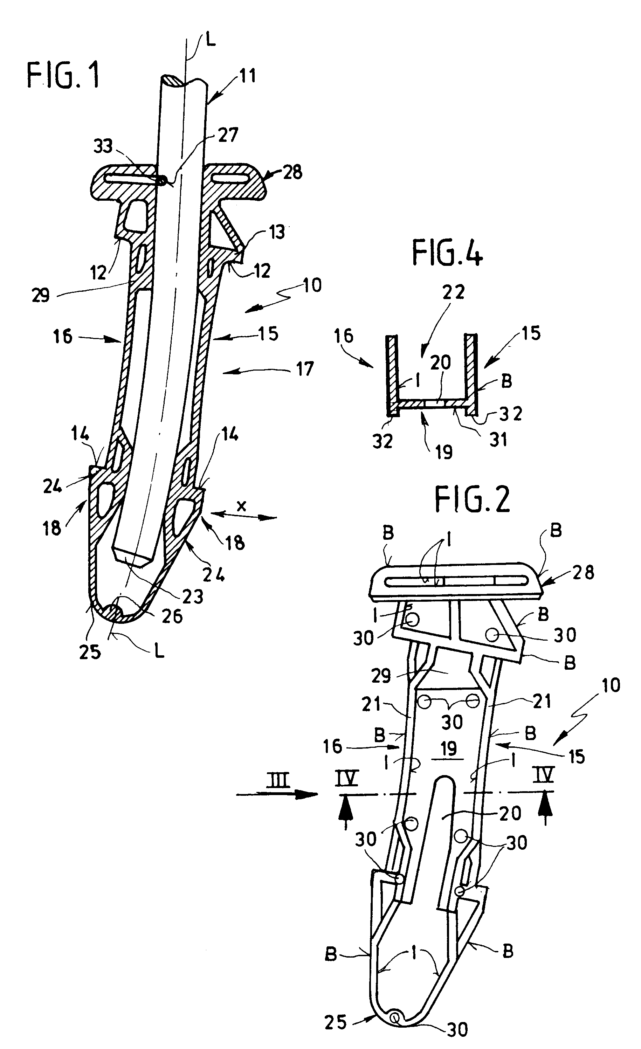

Aus den Zeichnungen ist im Zusammenhang deutlich zu ersehen, daß sämtliche Breitflächenbereiche, insbesondere der Seitenwände 15, 16 senkrecht auf der ebenen Grundplatte 19 stehen. Diese senkrechten Breitflächenteile sind, soweit sie Außenflächen sind, durchgehend mit B, und soweit sie Innenflächen sind, mit I bezeichnet. Alle aus der Zeichnungsebene gemäß den Fig. 1 und 2 hervorragenden inneren und äußeren Breitflächenteile B und I stehen senkrecht auf einer gemeinsamen Bezugsebene E, die beim Ausführungsbeispiel durch die ebene Grundplatte 19 gebildet ist.

Aufgrund der vorstehenden Ausführungen ist klar, daß lediglich der Rohrbereich 29 der Sitzhülse 10 zur Ausbildung seiner kreiszylindrischen Innenfläche eines Kernes bedarf, während der übrige Bereich, also der gesamte Haltebereich 17 der Sitzhülse 10, mit einem einfachen Werkzeugbereich nach Art einer Abstreiferform hergestellt werden kann. Die diesbezüglichen Auswerfermarkierungen wurden mit der Bezugsziffer 30 versehen.

Aus Fig. 4 geht der etwa kastenartige Querschnitt des Haltebereichs 17 deutlich hervor. Die Seitenwände 15, 16 bilden über die Außenfläche 31 der Grundplatte 19 vorragende, das Widerstandsmoment erhöhende, etwa gurtartige Verstärkungsrippen (Axialansätze) 32.

## Patentansprüche

1. Kopfstütze für Kraftfahrzeugsitze, mit zwei zur Aufnahme je einer Tragstange (11) vorgesehenen, in rahmenseitigen Durchbrüchen einer Sitzlehne gehaltenen Sitzhülsen (10) aus Kunststoffspritzguß, von denen jede einen lehnenoberseitig aufsitzenden, am oberen Ende der Sitzhülse (10) angeordneten Kragen (13), einen sich daran unten anschließenden, umfangsseitig geschlossenen Rohrbereich (29) und im Anschluß an letzteren einen zwei diametral gegenüberliegende Axialschlitze (20, 22) bildenden unteren Haltebereich (17) aufweist, welcher außen zwei einander gegenüberliegende Rastvorsprünge (18) besitzt, welche durch Einführen der Tragstange (11) etwa dübelartig auseinanderspreizbar und rahmenseitig verrastbar sind, dadurch gekennzeichnet, daß der Haltebereich (17) eine sich etwa tangential bezüglich des Rohrbereichs (29) von letzterem nach unten erstreckende Grundplatte (19) aufweist, von welcher im Radialabstand voneinander zwei Seitenwände (15, 16) sowie andere Wandteile (13, 25, 28) frei vorragen, deren sämtliche Breitflächenbereiche (B, I) senkrecht auf einer gemeinsamen Bezugsebene (E) stehen und mit von der Grundplatte (19) wegweisenden schmalen Flächenbereichen (21) einen Axialschlitz (22) begrenzen, während die Grundplatte (19) den zu ihrem unteren Ende hin offenen anderen Axialschlitz (20) bildet und wobei die Rastvorsprünge (18) außen an den Seitenwänden (15, 16) angeordnet sind.

2. Kopfstütze nach Anspruch 1, dadurch gekennzeichnet, daß die Grundplatte (19) eben ist und die gemeinsame Bezugsebene (E) bildet.

3. Kopfstütze nach Anspruch 1 oder nach Anspruch 2, dadurch gekennzeichnet, daß den radial zur Tragstange (11) verlaufenden Rastflächen (14) der Rastvorsprünge (18) zur Tragstangenlängsachse (L) in Richtung unteres Tragstangenende (23) geneigte äußere Führungsflächen (24) vorgeordnet sind, welche Wandteile bilden und mittels eines etwa haarnadelartig gekrümmten, flachbügelartigen Fortsatzes (25) miteinander verbunden sind.

4. Kopfstütze nach Anspruch 3, dadurch gekennzeichnet, daß der flachbügelartige Fortsatz (25) an seiner der Scheitellinie gegenüberliegenden Innenwandfläche mit einer insbesondere walzenartigen Verstärkung (26) als Anschlagbegrenzung für die untere Stirnfläche (bei 23) der Tragstange (11) versehen ist.

5. Kopfstütze nach einem der vorangehenden Ansprüche, dadurch gekennzeichnet, daß die beiden Seitenwände (15, 16) die Außenfläche (31) der Grundplatte (19) mit etwa rippenartig vorragenden Axialansätzen (32) überragen.

## Claims

1. A head rest for vehicle seats having two seat shells (10) made of injection moulded plastic, held in openings on the frame side of a seat back, for accommodating a supporting rod (11), each of said seat shells (10) having a collar (13) seated on the upper side of the seat back, arranged at the upper end of the seat shell (10), a tubular region (29) connected to the bottom of said collar (13) and closed at its periphery and, connecting to said tubular region (29), a lower retaining region (17) forming two diametrically opposed axial slots (20, 22), said lower retaining region (17) having, on the outside, two latching projections (18) lying opposite one another, which can be spread apart and latched on the frame side in a roughly dowel-like manner by the introduction of the supporting rod (11), characterised in that the retaining region (17) has a base plate (19), extending downwards from the tubular region (29) approximately tangentially thereto, two side walls (15, 16) and other wall portions (13, 25, 28) of which freely project at a radial distance from one another, the entire wide surface regions (B, I) of which are perpendicular to a common reference plane (E) and delimit an axial slot (22) with narrow surface regions (21) pointing away from the base plate (19), while the base plate (19) forms the other axial slot (20), which is open towards its lower end, and wherein the latching projections (18) are arranged on the outside of the side walls (15, 16).

2. A head rest according to claim 1, characterised in that the base plate (19) is flat and forms the common reference plane (E).

3. A head rest according to claim 1 or claim 2, characterised in that the latching surfaces (14) of the latching projections (18), extending radially to the supporting rod (11), are arranged before outer guide surfaces (24) which are inclined towards the longitudinal axis (L) of the supporting rod in the direction of the lower end (23) of the supporting rod, said guide surfaces (24) forming wall portions and being connected to one another by means of a flat clip-like extension (25), which is curved in a roughly hairpin-like manner.

4. A head rest according to claim 3, characterised in that the flat clip-like extension (25) is provided, on its inner wall surface lying opposite the apex line, with a reinforcement (26), particularly a roll-like reinforcement, as a stop delimitation for the lower end face (at 23) of the supporting rod (11).

5. A head rest according to one of the preceding claims, characterised in that the two side walls (15, 16) project over the outer surface (31) of the base plate (19) with roughly rib-like projecting axial lugs (32).

## Revendications

1. Appui-tête pour sièges de véhicule automobile comportant deux manchons d'assise (10) prévus pour supporter chacun une tige support (11), maintenus dans des passages, situés du côté du cadre, d'un dossier de siège et réalisés en matière synthétique moulée par injection, manchons dont chacun présente une collerette (13), disposée à l'extrémité supérieure du manchon d'assise (10), reposant en face supérieure du dossier, une zone tubulaire (29) s'y raccordant vers le dessous et fermée en périphérie, et, à la suite de cette dernière, une zone support inférieure (17), constituant deux fentes axiales (20, 22) diamétralement opposées et comportant extérieurement deux saillies d'encliquetage (18) opposées l'une à l'autre, susceptibles d'être écartées l'une de l'autre à peu près à la façon d'une cheville et d'être encliquetées côté cadre, en s'introduisant dans la tige support (11),
caractérisé en ce que la zone support (11) présente une plaque de base (19) s'étendant à peu près tangentiellement par rapport à la zone tubulaire (29) et allant vers le bas par rapport à celle-ci, plaque de base d'où font saillie librement, à distance radiale l'une de l'autre, deux parois latérales (15, 16), ainsi que d'autres parois latérales (13, 25, 28), dont l'ensemble des zones de surface large (B, I) sont situées perpendiculairement par rapport à un plan de référence (E) commun et délimitent, à l'aide de zones de surface (21) étroites s'écartant de la plaque de base (19), une fente axiale (22), tandis que la plaque de base (19) constitue l'autre fente axiale (20), ouverte vers son extrémité inférieure, les saillies d'encliquetage (18) étant disposées extérieurement sur les parois latérales (15, 16).

2. Appui-tête selon la revendication 1,
caractérisé en ce que la plaque de base (19) est plane et constitue le plan de référence (E) commun.

3. Appui-tête selon la revendication 1 ou selon la revendication 2,
caractérisé en ce que des surfaces de guidages (24) extérieures, inclinées en direction de l'extrémité inférieure (23) de la tige support, par rapport à l'axe longitudinal (L) de la tige support, sont disposées devant les faces d'encliquetage (14), s'étendant radialement par rapport à la tige support (11), des saillies d' encliquetage (18), les surfaces de guidage (24) constituant des parties de parois et étant reliées ensemble au moyen d'un prolongement (25) en forme d'étrier plat, incurvé en épingle à cheveux.

4. Appui-tête selon la revendication 3,
caractérisé en ce que le prolongement (25) en forme d'étrier plat est pourvu sur sa surface de paroi intérieure, opposée à la ligne de sommet, d'un renforcement (26), en particulier en forme de cylindre, servant de limitation de butée pour la face frontale inférieure en (23), de la tige support (11).

5. Appui-tête selon l'une des revendications précédentes,
caractérisé en ce que les deux parois latérales (15, 16) dépassent de la surface extérieure (31) de la plaque de base (19), par des appendices axiaux (32) faisant saillie à la façon de nervures.
